# EUROPÄISCHE PATENTANMELDUNG

(11) **EP 2 923 814 A1**
(43) Veröffentlichungstag der Anmeldung: **30.09.2015**
(21) Anmeldenummer: 15000793.8
(22) Anmeldetag: 17.03.2015
(51) Int. Cl.: B29C 45/16, B29C 45/28, B29C 45/53, B29B 11/08

(54) **Spritzstation für die Herstellung von Multilayer-Vorformlingen**

(30) Priorität: 25.03.2014 DE 102014004221
(71) Anmelder: HPT Hochwertige Pharmatechnik GmbH & Co. KG, 98724 Neuhaus am Rennweg (DE)
(72) Erfinder: Koch, Michael, 98693 Ilmenau (DE); Türk, Marko, 98587 Bermbach (DE); Treuner, Lutz, 96361 Steinbach am Wald (DE)
(74) Vertreter: Grättinger Möhring von Poschinger Patentanwälte Partnerschaft

(57) **Zusammenfassung**

Eine Spritzstation für die Herstellung von MultilayerVorformlingen umfasst ein Spritzformwerkzeug (2), mindestens eine Mehrstoffdüse (3), mindestens zwei daran angeschlossene, als Zylinderspeicher ausgeführte Schmelzespeicher (4, 5), mindestens zwei diese beschickende Plastifiziereinheiten (6, 7) und eine Steuereinheit (8). Die Mehrstoffdüse weist den Schmelzekanälen (9, 10) zugeordnete Schließschieber (17, 19) auf, welche von der Steuereinheit dergestalt unabhängig voneinander separat ansteuerbar sind, dass die Schmelzekanäle jeweils einen stufenlos veränderbaren Durchtrittsquerschnitt aufweisen. Den Kolben (22, 23) der Zylinderspeicher sind von der Steuereinheit ansteuerbare Proportional-Stellantriebe (26, 27) zugeordnet. Die Steuereinheit umfasst eine Speichereinheit für koordinierte Bewegungs- bzw. Positionsprofile der mindestens zwei Schließschieber und der mindestens zwei Schmelzespeicher-Kolben.

## Beschreibung

Die vorliegende Erfindung betrifft eine Spritzstation für die Herstellung von Multilayer-Vorformlingen.

Zur Herstellung von Kunststoff-Hohlkörpern (z.B. Flaschen, Dosen und sonstige Behältnisse) sind verschiedene Verfahren bekannt. Bei einer ersten Gruppe derartiger Verfahren, dem sog. Extrusionsblasformen, werden die einzelnen Hohlkörper aus einem thermoplastischen Schlauch hergestellt, der in die Länge gezogenen und - in einer Form - aufgeblasen wird. Bei einer anderen Gruppe derartiger Verfahren wird ein Vorformling aufgeblasen, wobei das Aufblasen in einer Kavität erfolgt, welche die endgültige Form des betreffenden Hohlkörpers definiert. In diese Gruppe von Verfahren, auf die sich die vorliegende Erfindung bezieht, fallen das Spritzblasen sowie das Streckblasen, wobei beim Streckblasen der Vorformling vor seinem Aufblasen mechanisch gereckt wird.

Zur Herstellung höherwertiger Kunststoff-Hohlkörper, welche einen Mehrschichtaufbau aufweisen, kommen Multilayer-Vorformlinge zum Einsatz. Die aus Multilayer-Vorformlingen hergestellten Mehrschicht-Kunststoffhohlkörper zeichnen sich durch eine verbesserte Funktionalität aus, beispielsweise indem eine erste Schicht der Wand des Hohlkörpers im Hinblick auf die mechanische Festigkeit optimiert ist, eine zweite Schicht hingegen im Hinblick auf die chemische Beständigkeit gegenüber dem vorgesehenen Inhalt des Hohlkörpers und/oder die Oberflächengüte, d.h. eine geringe Porosität.

Zwar wurden umfangreich Vorschläge zur Herstellung von Multilayer-Vorformlingen gemacht (vgl. z.B. DE 3049725 C2, WO 89/03756 A1, JP 4104022 B2, WO 2011/006999 A1, WO 2013/000044 A2, US 4904509 A, US 8518504 B2, US 5972258 A, US 6276914 B1, US 6344249 B1). Indessen ist die Herstellung besonders hochwertiger Mehrschicht-Kunststoffhohlkörper aus Multilayer-Vorformlingen nach wie vor eine technische Herausforderung, die noch nicht in zufriedenstellender Weise gelöst ist. Dies hängt unter anderem damit zusammen, dass beim Umformen des Multilayer-Vorformlings in den Mehrschicht-Kunststoffhohlkörper - durch Blas- bzw. Streckblasverfahren - eine flächenmäßige Dehnung des Materials um das 12- bis 15-fache erfolgt. Die Wandstärke des Multilayer-Vorformlings reduziert sich somit beim Aufblasen auf bis zu ein Fünfzehntel der ursprünglichen Dicke. Dies kann bei einer (aus Gründen des Gewichts des Kunststoff-Hohlkörpers und der zu dessen Herstellung aufzuwendenden Materialkosten angestrebten) geringen Wandstärke des Kunststoff-Hohlkörpers und einer - bei Anwendung herkömmlicher Technologie zur Herstellung der Vorformlinge nicht auszuschließenden - Inhomogenität der Materialverteilung innerhalb der einzelnen Schichten der Multilayer-Vorformlinge dazu führen, dass innerhalb der aus diesen Vorformlingen hergestellten Mehrschicht-Kunststoffhohlkörper die einzelne Schichten in dem Sinne funktional lückenhaft sind, als sie ihre bestimmungsgemäße Funktion nicht erfüllen.

Die vorliegende Erfindung ist darauf gerichtet, diesem Problem abzuhelfen. Insbesondere sollen die Voraussetzungen für die Herstellung höchsten Qualitätsanforderungen genügenden Mehrschicht-Kunststoffhohlkörpern geringer Wandstärke geschaffen werden.

Gelöst wird die vorstehend angegebene Aufgabenstellung durch die in Anspruch 1 angegebene Spritzstation für die Herstellung von Multilayer-Vorformlingen. Die erfindungsgemäße Spritzstation zeichnet sich somit durch die folgenden Merkmale aus:
- Die Spritzstation umfasst ein mindestens eine Spritzkavität aufweisendes Spritzformwerkzeug, mindestens eine Mehrstoffdüse, mindestens zwei daran angeschlossene Schmelzespeicher, mindestens zwei diese beschickende Plastifiziereinheiten und eine Steuereinheit;
- die Mehrstoffdüse ist als Verschlussdüse mit mindestens zwei zumindest abschnittsweise konzentrisch zueinander angeordneten, an die Schmelzespeicher angeschlossenen, sich innerhalb der Mehrstoffdüse vereinigenden Schmelzekanälen und zwei diesen zugeordneten, separat ansteuerbaren Schließschiebern ausgeführt;
- auf die Schließschieber wirken von der Steuereinheit unabhängig voneinander ansteuerbare Stellentriebe dergestalt, dass die Schmelzekanäle jeweils einen stufenlose veränderbaren Durchtrittsquerschnitt aufweisen;
- die Schmelzespeicher sind als Zylinderspeicher mit einem dem jeweiligen Kolben zugeordneten, von der Steuereinheit ansteuerbaren Proportional-Stellantrieb ausgeführt;
- die Steuereinheit umfasst eine Speichereinheit für koordinierte Positions- bzw. Bewegungsprofile der mindestens zwei Schließschieber und der mindestens zwei Schmelzespeicher-Kolben.

Im funktional-synergetischen Zusammenwirken miteinander gestatten die für die erfindungsgemäße Spritzstation maßgeblichen Merkmale die Herstellung von Multilayer-Vorformlingen, bei denen die Verteilung der einzelnen Komponenten innerhalb der Wand des Vorformlings höchsten Anforderungen genügt, d.h. insbesondere exakt einem vorgegebenen Verteilungsprofil folgt. Auch die besonders kritische Zone eines durch Blasformen hergestellten Mehrschicht-Hohlkörpers, nämlich der Boden, lässt sich in Anwendung der vorliegenden Erfindung mit zufriedenstellendem Ergebnis herstellen; so ist eine Versiegelung des Bodens unter vollständiger Kapselung einer Barriereschicht möglich. In Verbindung mit den übrigen Merkmalen kommt in diesem Zusammenhang insbesondere zum Tragen, dass den sich innerhalb der Mehrstoffdüse vereinigenden Schmelzekanälen einzelne, von der Steuereinheit separat ansteuerbare Schließschieber zugeordnet sind, mittels derer sich die Durchtrittsquerschnitte der Schmelzekanäle stufenlos und unabhängig voneinander einstellen lassen, wobei zugleich die in den Schmelzespeichern bereitgestellte Schmelze aus diesen durch Kolben, welche mittels von der Steuereinheit unabhängig voneinander ansteuerbaren Proportional-Stellantrieben bewegbar sind, profilgesteuert austreibbar ist. Mittels der besagten Proportional-Stellantriebe lässt sich die Bewegungsgeschwindigkeit der beiden Kolben der Schmelzespeicher stufenlos vorgeben. Sowohl die Positionierung der Schließschieber als auch die Bewegung der Kolben der Schmelzespeicher folgen dabei, zueinander koordiniert, in der Steuereinheit hinterlegten koordinierten Positions- bzw. Bewegungsprofilen.

Indem in dem unter Verwendung der erfindungsgemäßen Spritzstation hergestellten Multilayer-Vorformling die ideale Verteilung des Materials innerhalb der einzelnen Schichten der Wand optimal eingehalten wird, lässt sich die Gefahr, dass sich beim Blasen bzw. Streckblasen des betreffenden Vorformlings Fehler (d.h. Abweichungen des Mehrschicht-Kunststoffhohlkörpers gegenüber dem Sollmaß der einzelnen Schichten) einstellen, signifikant reduzieren. Sogar Materialpaarungen (bestimmte pharmazugelassene Kunststoffe), die sich in Anwendung herkömmlicher Technologie nicht mit zufriedenstellendem Ergebnis zu einem Schichtverbund-Hohlkörper verarbeiten lassen, können in Anwendung der vorliegenden Erfindung zur Herstellung von Mehrschicht-Hohlkörpern verwendet werden. Im Ergebnis lassen sich unter Nutzung der vorliegenden Erfindung Mehrschicht-Kunststoffhohlkörper herstellen, welche höchsten Anforderungen genügen. Insbesondere lassen sich Mehrschicht-Kunststoffhohlkörper herstellen, welche sich für die Aufbewahrung sensibler Pharmazeutika eignen und die hinsichtlich ihrer praxisrelevanten Eigenschaften sogar aus Glas hergestellten Behältnissen überlegen sind. Namentlich sind in Anwendung der vorliegenden Erfindung Behältnisse für Pharmazeutika herstellbar, deren Oberfläche weitaus geringere Mikroporositäten aufweisen als Glasbehälter, was die Gefahr einer Besiedlung der Oberfläche durch Bakterien oder sonstige Mikroorganismen signifikant resultiert. Hinzu kommt, dass die Bruchgefahr bei derartigen Mehrschicht-Kunststoffhohlkörpern um ein Vielfaches geringer ist als im Falle von Glasbehältern. So vermag die vorliegende Erfindung im Ergebnis insbesondere zu einer besonders vorteilhaften Logistik für Pharmazeutika beizutragen.

Im Hinblick auf eine gesteigerte Wirtschaftlichkeit ist von Vorteil, wenn das Spritzformwerkzeug als Mehrkavitäten-Spritzformwerkzeug ausgeführt ist, wobei jeder Spritzkavität eine eigene Mehrstoffdüse zugeordnet ist. Bei dieser Weiterbildung wird somit - im Interesse eines optimalen Ergebnisses im obigen Sinne - nicht der eine Mehrstoffdüse verlassende Mehrkomponenten-Schmelzestrom auf zwei oder mehr Kavitäten verteilt, sondern vielmehr spritzt eine Mehrstoffdüse in genau eine Kavität ein. Es sind, mit anderen Worten, ebenso viele Mehrstoffdüsen vorgesehen wie Kavitäten im Mehrkavitäten-Spritzformwerkzeug.

Sind im Sinne der vorstehenden Weiterbildung mehrere in ein Mehrkavitäten-Spritzformwerkzeug einspritzende Mehrstoffdüsen vorgesehen, so kommt - im Interesse eines reduzierten apperatetechnischen Aufwands und einer geringeren Baugröße der Spritzstation - in Betracht, dass mehrere Mehrstoffdüsen von gemeinsamen Schmelzespeichern aus beschickt werden. Dabei ist besonders bevorzugt jeder Schmelzespeicher an zwei Mehrstoffdüsen angeschlossen. Bei eher einfach gestalteten Geometrien des herzustellenden Multilayer-Vorformlings kann jedoch jeder Schmelzespeicher auch an mehr, nämlich an bis zu acht Mehrstoffdüsen angeschlossen sein, um diese, d.h. deren Schmelzespeicher, synchron zu beschicken. Auch kommt zur Reduzierung des apparatetechnischen Aufwands in Betracht, mittels eines einzigen Antriebs die Kolben mehrerer Schmelzespeicher, welche jeweils einer Mehrstoffdüse oder aber mehreren Mehrstoffdüsen zugeordnet sein könne, gemeinsam parallel zu betätigen.

Besonders gute Ergebnisse lassen sich erzielen, wenn die den Schließschiebern zugeordneten Stellantriebe jeweils ein Differenzgetriebe umfassen. Mit solchen Differenzgetrieben ist - bei vergleichsweise kompakter Bauweise - eine hochpräzise Positionierung der Schließschieber möglich, so dass sich die Durchtrittsquerschnitte der Schmelzekanäle dementsprechend mit höchster Präzision gemäß dem vorgegebenen Profil einstellen lassen.

Gemäß einer wiederum anderen bevorzugten Weiterbildung der vorliegenden Erfindung ist zumindest eine der Eintrittsöffnungen, durch welche hindurch Schmelze aus den Schmelzespeichern in die Schmelzekanäle gelangt, nahe der Vereinigung der Schmelzekanäle angeordnet. Die Länge des betreffenden Schmelzekanals von der Eintrittsöffnung bis zur Vereinigung der Schmelzekanäle ist in diesem Falle auf jenes Maß beschränkt, wie es für eine homogene Verteilung der Schmelze in dem betreffenden Schmelzekanal an dessen Vereinigung mit dem mindestens einen weiteren Schmelzekanal erforderlich ist. Auf diese Weise ergibt sich ein vergleichsweise steifes hydraulisches System, was der Fertigungsgenauigkeit der hergestellten Multilayer-Vorformlinge entgegenkommt. Die mindestens zwei Schmelzekanäle vereinigen sich im Übrigen besonders bevorzugt erst unmittelbar vor der Mündung der Mehrstoffdüse oder gar erst im Mündungsbereich, ggf. erst in der Mündung selbst. Es erfolgt somit in diesem Falle eine getrennte Zufuhr der Schmelzeströme bis unmittelbar vor die Mündung bzw. in den Mündungsbereich oder die Mündung der Mehrstoffdüse hinein. Bevorzugt sind auch die (stufenlos veränderbaren) minimalen Durchtrittsquerschnitte der Schmelzekanäle unmittelbar vor der Mündung der Mehrstoffdüse bzw. im Mündungsbereich selbst angeordnet.

Was die Schmelzespeicher angeht, so umfassen diese bevorzugt jeweils eine in ein Gehäuse des Schmelzespeichers eingesetzte Reduzierhülse, in welcher der Kolben des betreffenden Schmelzespeichers dichtend geführt ist. Über die Auswahl eines für die jeweilige Anwendung geeigneten Reduzierhülse/Kolben-Paares lässt sich der Querschnitt des Schmelzeraumes des Schmelzespeichers modifizieren. Er wird typischerweise so gewählt, dass er nur unwesentlich größer ist als das für den betreffenden Schuss benötigte Schmelzevolumen. Auf diese Weise wird der Hub des Kolbens des betreffenden Schmelzespeichers nahezu vollständig für den betreffenden Schuss ausgenutzt. Dies wirkt sich positiv aus im Hinblick auf die genaue Dosierung und somit letztendlich auch die Fertigungsgenauigkeit des herzustellenden Vorformlings.

Gemäß einer nochmals anderen bevorzugten Weiterbildung sind die Antriebe der Plastifiziereinheiten, die Stellantriebe der Schließschieber und die Proportional-Stellantriebe der Schmelzespeicherkolben in elektromechanischer Bausweise ausgeführt. Dies gestattet den Einsatz der erfindungsgemäßen Technologie in Reinraumanwendungen, wie sie insbesondere für die Herstellung von Behältern für sensible pharmazeutische Produkte gelten.

Die Schließschieber der Mehrstoffdüse sind bevorzugt als konzentrisch zueinander angeordnete Verschlussnadeln ausgeführt, wobei eine erste der Verschlussnadeln als Hohlnadel ausgeführt ist. Dabei sind der veränderbare Durchtrittsquerschnitt eines ersten Schmelzekanals zwischen der Hohlnadel und dem Düsengehäuse und der veränderbare Durchtrittsquerschnitt eines zweiten Schmelzekanals zwischen der Hohlnadel und der innerhalb dieser angeordneten zweiten Verschlussnadel angeordnet. Von besonderem Vorteil ist dabei, wenn die Hohlnadel sich nahe der Düsenmündung in Richtung auf diese sowohl außen als auch innen verjüngt. Dies begünstigt die für die vorliegende Erfindung besonders wichtige Dosiergenauigkeit der Schmelzeströme durch gezielte Einflussnahme auf die Durchtrittsquerschnitte der Schmelzekanäle. Vor dem gleichen Hintergrund sowie auch im Interesse einer besonderen Homogenität des Schmelzeflusses verjüngt sich auch die innerhalb der Hohlnadel angeordnete Verschlussnadel in Richtung auf die Düsenmündung hin und läuft dort im Wesentlichen in einer Spitze aus. Besonders bevorzugt korrespondiert mündungsnah die Außenkontur der Hohlnadel zu der Innenkontur des Düsengehäuses in dem Sinne, dass die Hohlnadel in einer den ersten Schmelzekanal verschließenden Stellung flächig innen an dem Düsengehäuse anliegt. In entsprechender Weise korrespondiert bevorzugt mündungsnah die Außenkontur der in der Hohlnadel angeordneten Verschlussnadel zu der Innenkontur der Hohlnadel in dem Sinne, dass die Verschlussnadel in einer den zweiten Schmelzekanal verschließenden Stellung flächig innen an der Hohlnadel anliegt.

Bevorzugt sind, gemäß einer wiederum anderen vorteilhaften Weiterbildung der Erfindung, die Schmelzespeicher voneinander thermisch entkoppelt, insbesondere indem sie als zwei getrennte, nicht direkt untereinander verbundene Bauteile ausgeführt sind. Hierdurch kann unabhängig voneinander auf das Wärmeprofil der verschiedenen Schmelzen eingewirkt werden, so dass diese optimal konditioniert werden können.

Die in der Speichereinheit der Steuereinheit hinterlegten koordinierten Positions- bzw. Bewegungsprofile der mindestens zwei Schließschieber und der mindestens zwei Schmelzespeicherkolben sind besonders bevorzugt als Zeit-Postion-Bewegungsprofile ausgeführt, welche von dem Schmelzedruck (innerhalb der Schmelzespeicher und/oder der Schmelzekanäle) gänzlich unabhängig sind. Demnach werden - während eines Arbeitszyklus' - die Schließschieber sowie die Schmelzespeicher-Kolben ohne jegliche Berücksichtigung des Schmelzedruckes im System allein über die Zeit gesteuert.

Die vorliegende Erfindung lässt sich mit besonderem Vorteil anwenden, wenn die mittels der erfindungsgemäßen Spritzstation hergestellten Multilayer-Vorformlinge unmittelbar weiterverarbeitet werden. In diesem Sinne ist die vorliegende Erfindung besonders bevorzugt in eine Spritzblasmaschine, welche der Herstellung von einen mehrlagigen Wandaufbau aufweisenden Hohlkörpern dient, implementiert, wobei die Spritzblasmaschine eine gemäß der vorstehend erläuterten Erfindung ausgeführte Spritzstation, eine Übergabeeinheit und eine Blasstation mit einem mindestens eine Blaskavität aufweisende Blasformwerkzeug sowie eine Blasgasquelle umfasst. Bei dieser Form der Umsetzung der vorliegenden Erfindung wird die Wärme des Vorformlings für das nachfolgende Blasverfahren genutzt, was unter anderem unter Gesichtspunkten der Effizienz günstig ist. Dies stellt indessen keineswegs die einzige Möglichkeit der praktischen Umsetzung der vorliegenden Erfindung dar. Vielmehr lassen sich mit der erfindungsgemäßen Spritzstation mit Vorteil solche auch Multilayer-Vorformlinge herstellen, die in einem entkoppelten zweiten Verfahren weiterverarbeitet werden.

Unter Einsatz der erfindungsgemäßen Spritzstation lassen sich Multilayer-Vorformlinge aus unterschiedlichen Materialpaarungen mit Erfolg herstellen. Bevorzugte Materialpaarungen sind COP-PA, COP-EVOH, PET-PA und PET-EVOH.

Im Folgenden wir die vorliegende Erfindung anhand in der Zeichnung veranschaulichter bevorzugter Ausführungsbeispiele näher erläutert.
- Fig. 1: veranschaulicht dabei schematisch grundlegende Strukturen einer nach der Erfindung ausgeführten Spritzstation für zwei Komponenten.
- Fig. 2: zeigt in Seitenansicht eine konstruktive Realisierung einer nach der Erfindung ausgeführten, der synchronen Herstellung zweier Vorformlinge dienenden Spritzstation.
- Fig. 3: zeigt die Spritzstation gemäß Fig. 2 in Draufsicht.
- Fig. 4: zeigt die Spritzstation gemäß den Fig. 2 und 3 teilweise längs der Linie IV-IV in Fig. 3 parallel zur Längsachse geschnitten.
- Fig. 5: zeigt vergrößert ein Detail aus Fig. 4.

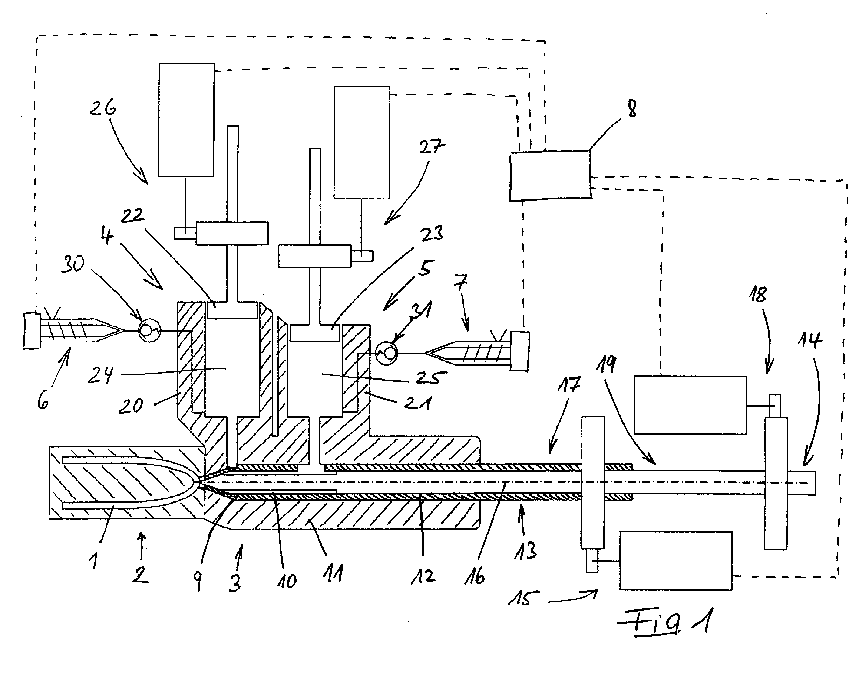

Die in Fig. 1 schematisch gezeigte Spritzstation für die Herstellung von Multilayer-Vorformlingen umfasst ein als solches bekanntes, eine Spritzkavität 1 aufweisendes Spritzformwerkzeug 2, eine auf dieses aufsetzbare Mehrstoffdüse 3, zwei an diese angeschlossene Schmelzespeicher 4, 5, zwei letztere beschickende Plastifiziereinheiten 6, 7 und eine Steuereinheit 8. Die Mehrstoffdüse 3 ist als Verschlussdüse ausgeführt. Sie weist einen an den ersten Schmelzespeicher 4 angeschlossen, einen ringförmigen Querschnitt aufweisenden ersten Schmelzekanal 9 und einen an den zweiten Schmelzespeicher 5 angeschlossen, ebenfalls einen ringförmigen Querschnitt aufweisenden, zum ersten Schmelzekanal 9 konzentrisch angeordneten zweiten Schmelzekanal 10 auf. Der erste Schmelzekanal 9 ist dabei außen von dem Gehäuse 11 der Mehrstoffdüse 3 und innen von einer als Hohlnadel 12 ausgeführten ersten Verschlussnadel 13 begrenzt. Der zweite Schmelzekanal 10 ist demgegenüber außen von der Hohlnadel 12 und innen von einer dieserkonzentrisch angeordneten zweiten Verschlussnadel 14 begrenzt.

Die erste Verschlussnadel 13 (Hohlnadel 12) bildet einen mittels eines ersten Stellantriebs 15 längs ihrer Achse 16 verschiebbaren ersten Schließschieber 17. Die zweite Verschlussnadel 14 bildet einen mittels eines zweiten Stellantriebs 18 längs ihrer Achse 16 verschiebbaren zweiten Schließschieber 19. Die auf die beiden Schließschieber 17 und 19 wirkenden Stellantriebe 15 und 18 sind von der Steuereinheit 8 unabhängig voneinander dergestalt ansteuerbar, dass sich benachbart zur Mündung zu beiden Schmelzekanälen 9 und 10 stufenlos veränderbare Durchtrittsquerschnitte einstellen lassen. Der veränderbare Durchtrittsquerschnitt des ersten Schmelzekanals 9 ist dabei mündungsnah zwischen der Hohlnadel 12 und dem Gehäuse 11 der Mehrstoffdüse angeordnet und der veränderbare Durchtrittsquerschnitt des zweiten Schmelzekanals 10 mündungsnah zwischen der Hohlnadel 12 und der innerhalb dieser angeordneten zweiten Verschlussnadel 14.

Der erste und der zweite Schmelzespeicher 4 bzw. 5 sind als Zylinderspeicher ausgeführt. Sie umfassen jeweils ein Zylindergehäuse 20 bzw. 21 und einen zugeordneten Kolben 22 bzw. 23, welche gemeinsam einen ersten Schmelzeraum 24 bzw. einen zweiten Schmelzeraum 25 begrenzen. Der Kolben 22 des ersten Schmelzespeichers 4 ist mittels des zugeordneten, von der Steuereinheit 8 ansteuerbaren Proportional-Stellantriebs 26 verfahrbar. In entsprechender Weise ist der Kolben 23 des zweiten Schmelzespeichers 5 mittels des zugeordneten, von der Steuereinheit 8 ansteuerbaren Proportional-Stellantriebs 27 verfahrbar. Zum Spritzen eines Vorformlings wird durch profilgesteuertes Verfahren der Kolben 22 bzw. 23 im Sinne einer Verkleinerung des ersten Schmelzeraumes 24 und des zweiten Schmelzeraumes 25 Schmelze, d.h. eine erste Komponente in den ersten Schmelzekanal 9 und eine zweite Komponente in den zweiten Schmelzekanal 10 hinein und von dort über die den Schmelzekanälen zugeordneten profilgesteuert veränderbaren Durchtrittsquerschnitte hindurch in die Spritzkavität 1 des Spritzformwerkzeugs 2 verdrängt. Die Einstellung der Schließschieber 17 und 19 sowie die Bewegung der Kolben 22 und 23 der Schmelzespeicher 4 und 5 mittels der zugeordneten Stellantriebe erfolgt durch die Steuereinheit rein zeitgesteuert in Anwendung koordinierter Positions- bzw. Bewegungsprofile.

Die Schmelzespeicher 4 und 5 werden aus der jeweils zugeordneten Plastifiziereinheit 6 bzw. 7 mit Schmelze gespeist. Zwischen der jeweiligen Plastifiziereinheit 6 bzw. 7 und dem diesem zugeordneten Schmelzespeicher 4 bzw. 5 ist dabei jeweils ein Ventil 30 bzw. 31 angeordnet, welches beim Einspritzen von Schmelze in die Spritzkavität 1 geschlossen ist. Nach dem erfolgten Einspritzen werden die Schmelzespeicher 4 und 5, während die Kolben 22 und 23 zurückgezogen werden, aus den Plastifiziereinheiten 6 und 7 heraus wieder mit Schmelze befüllt, wozu die Ventile 30 und 31 geöffnet werden. Die beiden Schmelzekanäle 9 und 10 sind während des (erneuten) Befüllens der Schmelzespeicher 4 und 5 im Bereich des jeweiligen veränderbaren Durchtrittsquerschnitts vollständig geschlossen.

Zur Verkürzung des Abstands der Schmelze-Eintrittsöffnung in den zweiten Schmelzekanal 10 zur Düsenmündung, wo sich die beiden Schmelzekanäle 9 und 10 vereinigen, können die beiden Schmelzespeicher 4 und 5 (statt der schematisch veranschaulichten Anordnung hintereinander) beispielsweise auch einander mehr oder weniger gegenüberliegend angeordnet sein.

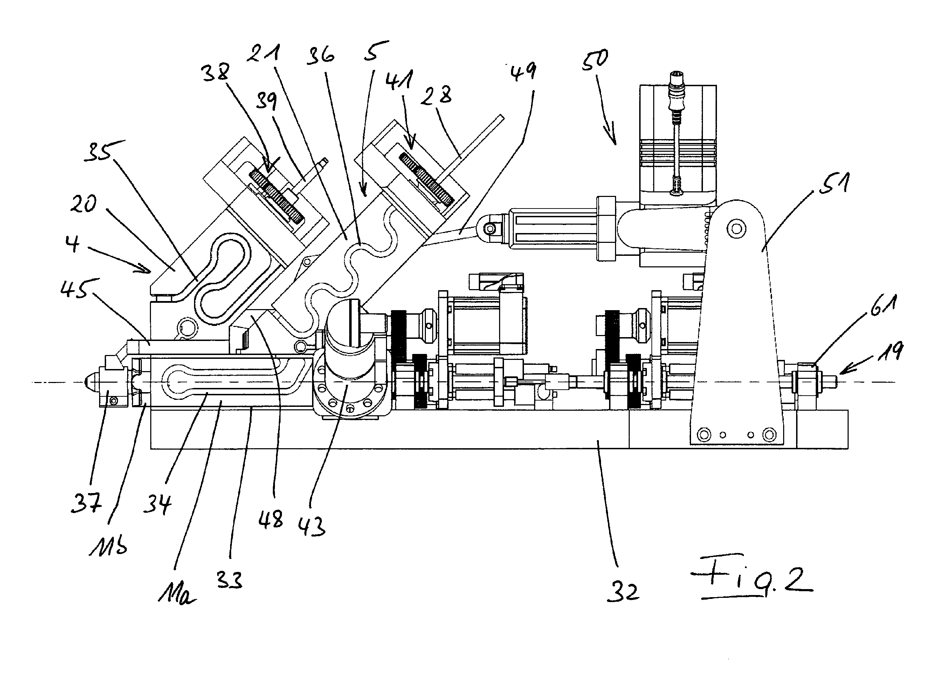

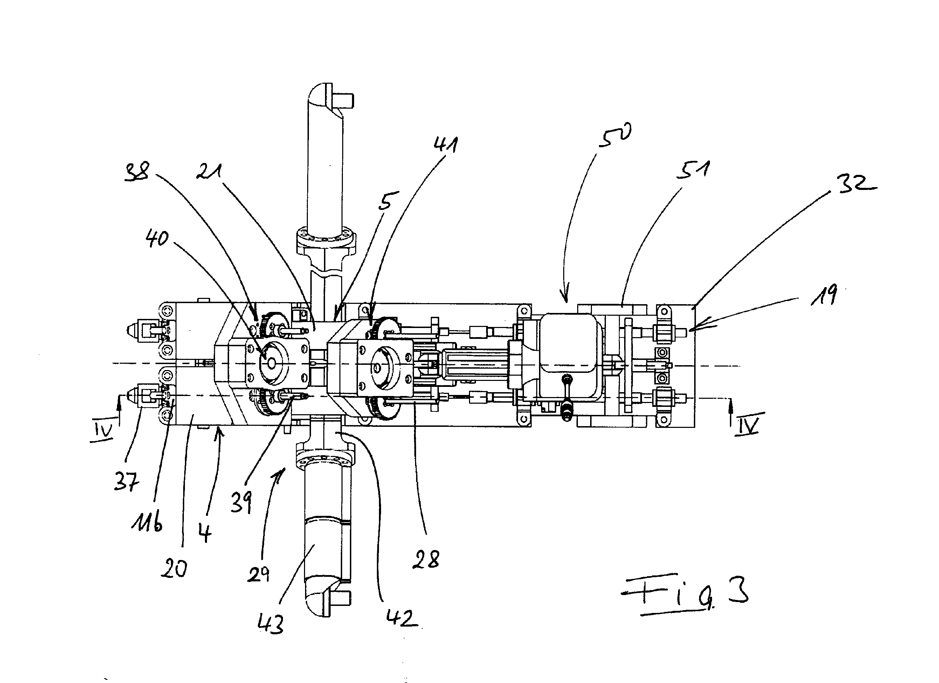

Zur Erläuterung der in den Figuren 2 bis 5 veranschaulichten konstruktive Ausführung kann im nennenswerten Umfang auf die vorstehenden Ausführungen zur Fig. 1 zurückgegriffen werden. Zur Vermeidung von Wiederholungen wird auf diese verwiesen. Hierzu werden die bereits in Fig. 1 benutzten Bezugszeichen in den Figuren 2 bis 5 zur Kennzeichnung der identischen Bauteile bzw. Komponenten verwendet.

Nach den Figuren 2 bis 5 ist das gesamte, der synchronen Herstellung zweier Multilayer-Vorformlinge dienende System auf einer Grundplatte 32 montiert. Auf dieser sind insbesondere die - jeweils von einer Isolation 33 umgebenen - Grundkörper 11a der Gehäuse 11 der beiden Mehrstoffdüsen 3 montiert. Zu erkennen ist in Fig. 2 eine an dem Grundkörper 11a des Gehäuses 11 der betrachterseitigen Mehrstoffdüse 3 angebrachte Heizschleife 34, mittels derer sich das Gehäuse 11 temperieren lässt. Weitere Heizschleifen 35 und 36 sind, um auch diese temperieren zu können, an den Zylindergehäusen 20 und 21 der (insgesamt vier) Schmelzespeicher 4 und 5 angebracht. Und die frontseitig an den Grundkörpern 11a der Gehäuse 11 der Mehrstoffdüsen 3 angeflanschten Mündungsteile 11b der Gehäuse 11 sind jeweils von einem Heizmantel 37 umgeben.

Die Kolben 22 der beiden ersten Schmelzespeicher 4 sind über ein Verteilergetriebe 38 synchronisiert, welches parallel auf die beiden die Kolben 22 antreibenden Spindeln 39 wirkt und an dessen Eingang 40 ein - nicht dargestellter - Schrittmotor anflanschbar ist. Entsprechendes gilt im Hinblick auf den synchronisierten Antrieb der Kolben der beiden - von den beiden ersten Schmelzespeichern 4 thermisch entkoppelten - zweiten Schmelzespeicher 5 über das auf die beiden Spindeln 28 wirkende Verteilergetriebe 41.

Zur Beschickung der beiden ersten Schmelzespeicher 4 und der beiden zweiten Schmelzespeicher 5 mit Schmelze (erste Komponente bzw. zweite Komponente) aus einem ersten Plastifizieraggregat bzw. einem zweiten Plastifizieraggregat dient eine Zuführ- und Verteileinheit 29. Diese umfasst ein Mittelstück 42, welches rückwärtig an die Gehäuse 11 der beiden Mehrstoffdüsen angeflanscht ist, und zwei seitlich daran angebaute beheizte Zuführungen 43. Letztere sind mit den beiden - nicht dargestellten - Plastifiziereinheiten koppelbar; und im Mittelstück 42 erfolgt eine Verteilung der in dieses eingespeisten ersten und zweiten Schmelze auf Befüllkanäle, welche in den Grundkörpern 11a der Gehäuse 11 verlaufen und an korrespondierenden Öffnungen von Einspeiseanschlüssen 44 der beiden ersten Schmelzespeicher 4 bzw. der beiden zweiten Schmelzespeicher 5 münden. Da die beiden ersten Schmelzespeicher 4 vermittels jeweils einer Zwischenplatte 45 auf den Grundkörpern 11a der Gehäuse 11 der zugeordneten Mehrstoffdüsen 3 montiert sind, stellen in den Zwischenplatten 45 vorgesehene Verbindungskanäle 46 jeweils die Verbindung zwischen den in den Gehäusen 11 bestehenden Befüllkanälen und den Einspeiseanschlüssen 44 her.

Die in den Einspeiseanschlüssen 44 vorgesehenen Ventile 30 bzw. 31 (vgl. Fig. 1) sind bei der Ausführungsform nach den Figuren 2 bis 5 als Drehschieberventile ausgeführt. Die den beiden ersten Schmelzespeichern 4 zugeordneten Drehschieber 47 und die den beiden zweiten Schmelzespeichern 5 zugeordneten Drehschieber sind über ein Koppelgestänge 48 dergestalt gekoppelt, dass sie simultan geöffnet und geschlossen werden. Auf das Koppelgestänge 48 wirkt die Antriebsstange 49, welche ihrerseits von einem Verstellmotor 50 betätigt wird. Der Verstellmotor ist mittels der Konsolen 51 auf der Grundplatte 32 montiert.

Der Schmelzeraum 24 jedes ersten Schmelzespeichers 4 ist über einen Druckkanal 52, welcher in mehreren Abschnitten 52a, 52b, 52c und 52d das Zylindergehäuse 20, die Zwischenplatte 45, den Grundkörper 11a des Gehäuses 11 sowie dessen Mündungsteil 11b durchsetzt, mit dem ersten Schmelzekanal 9 verbunden. In vergleichbarer Weise sind die Schmelzeräume 25 der beiden zweiten Schmelzespeicher 5 über jeweils einen Druckkanal 53 mit dem betreffenden zweiten Schmelzekanal 10 verbunden.

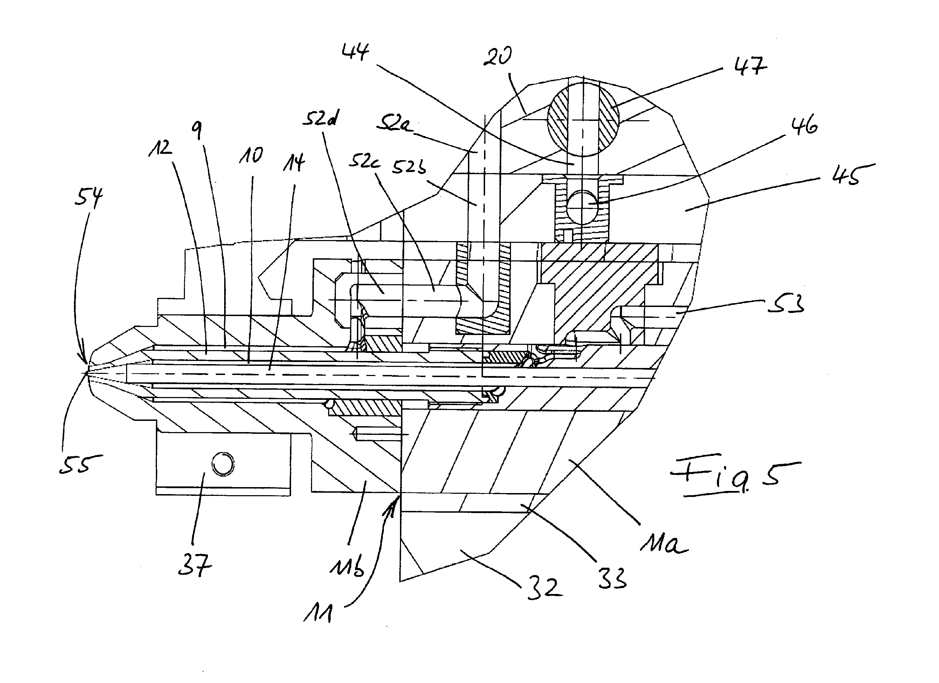

Wie dies insbesondere in Fig. 5 gezeigt ist, verjüngt sich jeweils die Hohlnadel 12 nahe der Düsenmündung 54 in Richtung auf diese hin sowohl außen als auch innen. Dabei ist die Außenkontur der Hohlnadel 12 an die mündungsnahe Innenkontur des Gehäuses 11 der Mehrstoffdüse 3 angepasst, so dass die Hohlnadel 12 in einer den ersten Schmelzekanal 9 verschließenden Stellung flächig innen an dem Gehäuse 11 der Mehrstoffdüse 3 anliegt. Ebenso verjüngt sich die innerhalb der Hohlnadel 12 angeordnete Verschlussnadel 14 in Richtung auf die Düsenmündung 54 hin und läuft im Wesentlichen in einer Spitze 55 aus. Dabei ist die Außenkontur der Verschlussnadel 14 an die Innenkontur der Hohlnadel 12 angepasst, so dass die Verschlussnadel 14 in einer den zweiten Schmelzekanal 10 verschließenden Stellung flächig innen an der Hohlnadel 12 anliegt. Die Vereinigung des ersten Schmelzekanals 9 und des zweiten Schmelzekanals 10 erfolgt erst in der Mündung 54 der Mehrstoffdüse 3. Indem bei diesem Ausführungsbeispiel die veränderbaren Durchtrittsquerschnitte der beiden Schmelzekanäle 9 und 10 sich bis direkt an die Mündung 54 erstrecken, stellen sie gewissermaßen stufenlos veränderbare Austrittsquerschnitte der Schmelzekanäle dar. Der zur gemeinsamen Betätigung der - über eine Koppelplatte 56 gekoppelten - Hohlnadeln 12 der beiden Mehrkomponentendüsen 3 vorgesehene Stellantrieb 15 umfasst einen Schrittmotor 57 und ein Differenzgetriebe 58. Der verschiebbaren Lagerung der Hohlnadeln 12 dienen Lagerböcke 59. In entsprechender Weise sind die - über eine Koppelplatte 60 gekoppelten und in Lagerblöcken 61 verschiebbar geführten - innerhalb der Hohlnadeln 12 angeordneten Verschlussnadeln 14 mittels eines gemeinsamen Stellantriebs 18 betätigbar.

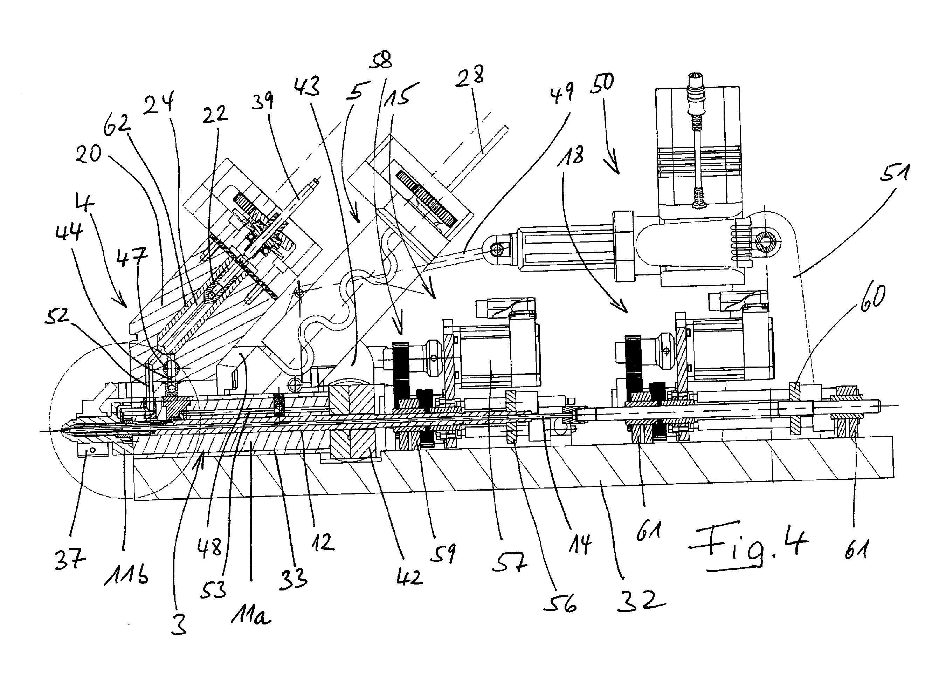

In Fig. 4 ist schließlich erkennbar, dass die ersten Schmelzespeicher 4 jeweils eine in das Zylindergehäuse 20 (austauschbar) eingesetzte Reduzierhülse 62 umfassen, in der der Kolben 22 des betreffenden Schmelzespeichers 4 dichtend geführt ist und die gemeinsam mit letzterem den eigentlichen Schmelzeraum 24 begrenzt. Durch Austausch der Reduzierhülse 62 (und des an diese angepassten Kolbens 22) gegen eine Paarung mit einem anderen Kolbendurchmesser wird das Volumen des Schmelzeraumes an den Schmelzebedarf für einen Schuss angepasst. Entsprechendes gilt für die beiden zweiten Schmelzespeicher 5.

## Patentansprüche

1. Spritzstation für die Herstellung von Multilayer-Vorformlingen mit den folgenden Merkmalen:
- die Spritzstation umfasst ein mindestens eine Spritzkavität (1) aufweisendes Spritzformwerkzeug (2), mindestens eine Mehrstoffdüse (3), mindestens zwei daran angeschlossene Schmelzespeicher (4, 5), mindestens zwei diese beschickende Plastifiziereinheiten (6, 7) und eine Steuereinheit (8);
- die Mehrstoffdüse (3) ist als Verschlussdüse mit mindestens zwei zumindest abschnittsweise konzentrisch zueinander angeordneten, an die Schmelzespeicher (4, 5) angeschlossen, sich innerhalb der Mehrstoffdüse vereinigenden Schmelzekanälen (9, 10) und zwei diesen zugeordneten, separat ansteuerbaren Schließschiebern (17, 19) ausgeführt;
- auf die Schließschieber (17, 19) wirken von der Steuereinheit (8) unabhängig voneinander ansteuerbare Stellantriebe (15, 18) dergestalt, dass die Schmelzekanäle (9, 10) jeweils einen stufenlos veränderbaren Durchtrittsquerschnitt aufweisen;
- die Schmelzespeicher (4, 5) sind als Zylinderspeicher mit einem dem jeweiligen Kolben (22, 23) zugeordneten, von der Steuereinheit (8) ansteuerbaren Proportional-Stellantrieb (26, 27) ausgeführt;
- die Steuereinheit (8) umfasst eine Speichereinheit für koordinierte Bewegungs- bzw. Positionsprofile der mindestens zwei Schließschieber (17, 19) und der mindestens zwei Schmelzespeicher-Kolben (22, 23).

2. Spritzstation nach Anspruch 1, **dadurch gekennzeichnet, dass** das Spritzformwerkzeug (2) als Mehrkavitäten-Spritzformwerkzeug ausgeführt ist, wobei jeder Spritzkavität eine eigene Mehrstoffdüse (3) zugeordnet ist.

3. Spritzstation nach Anspruch 2, **dadurch gekennzeichnet, dass** jeder Schmelzespeicher (4, 5) maximal an acht Mehrstoffdüsen (3), bevorzugt an nur eine oder zwei Mehrstoffdüsen angeschlossen ist.

4. Spritzstation nach einem der Ansprüche 1 bis 3, **dadurch gekennzeichnet, dass** die den Schließschiebern (17, 19) zugeordneten Stellantriebe (15, 18) jeweils ein Differenzgetriebe (58) umfassen.

5. Spritzstation nach einem der Ansprüche 1 bis 4, **dadurch gekennzeichnet, dass** zumindest eine der Eintrittsöffnungen, durch welche hindurch Schmelze aus den Schmelzespeichern (4, 5) in die Schmelzekanäle (9, 10) gelangt, nahe der Vereinigung der Schmelzekanäle angeordnet ist.

6. Spritzstation nach einem der Ansprüche 1 bis 5, **dadurch gekennzeichnet, dass** sich die Schmelzekanäle unmittelbar vor oder an der Mündung (54) der Mehrstoffdüse (3) vereinigen.

7. Spritzstation nach einem der Ansprüche 1 bis 6, **dadurch gekennzeichnet, dass** die Schmelzespeicher (4, 5) jeweils eine in ein Gehäuse (20, 21) des Schmelzespeichers auswechselbar eingesetzte Reduzierhülse (62) umfassen, in welcher der Kolben (22, 23) des betreffenden Schmelzespeichers dichtend geführt ist.

8. Spritzstation nach einem der Ansprüche 1 bis 7, **dadurch gekennzeichnet, dass** die Antriebe der Plastifiziereinheiten (6, 7), die Stellantriebe (15, 18) der Schließschieber (17, 19) und die Proportional-Stellantriebe (26, 27) der Schmelzespeicherkolben (22, 23) in elektromechanischer Bauweise ausgeführt sind.

9. Spritzstation nach einem der Ansprüche 1 bis 8, **dadurch gekennzeichnet, dass** die Schließschieber (17, 19) als konzentrisch zueinander angeordnete Verschlussnadeln (13, 14) ausgeführt sind, wobei mindestens eine erste der Verschlussnadeln als Hohlnadel (12) ausgeführt ist.

10. Spritzstation nach Anspruch 9, **dadurch gekennzeichnet, dass** der veränderbare Durchtrittsquerschnitt eines ersten Schmelzekanals (9) zwischen der Hohlnadel (12) und dem Düsengehäuse (11) und der veränderbare Durchtrittsquerschnitt eines zweiten Schmelzekanals (10) zwischen der Hohlnadel (12) und der innerhalb dieser angeordneten zweiten Verschlussnadel (14) angeordnet ist.

11. Spritzstation nach Anspruch 9 oder Anspruch 10, **dadurch gekennzeichnet, dass** die Hohlnadel (12) sich benachbart der Düsenmündung (54) in Richtung auf diese hin sowohl außen als auch innen verjüngt.

12. Spritzstation nach einem der Ansprüche 9 bis 11, **dadurch gekennzeichnet, dass** die innerhalb der Hohlnadel (12) angeordnete Verschlussnadel sich benachbart der Düsenmündung (54) in Richtung auf diese hin verjüngt und im Wesentlichen in einer Spitze (55) ausläuft.

13. Spritzstation nach einem der Ansprüche 1 bis 12, **dadurch gekennzeichnet, dass** die Schmelzespeicher (4, 5) voneinander thermisch entkoppelt sind.

14. Spritzstation nach einem der Ansprüche 1 bis 13, **dadurch gekennzeichnet, dass** in der Speichereinheit der Steuereinheit (8) Zeit-Position-Bewegungsprofile der mindestens zwei Schließschieber (17, 19) und der mindestens zwei Schmelzespeicher-Kolben (22, 23) hinterlegt sind.

15. Spritzstation nach einem der Ansprüche 1 bis 14, **dadurch gekennzeichnet, dass** die in der Speichereinheit hinterlegten Bewegungsprofile schmelzedruckunabhängig sind.

16. Spritzblasmaschine, welche der Herstellung von einen mehrlagigen Wandaufbau aufweisenden Hohlkörpern dient, umfassend eine Spritzstation nach einem der Ansprüche 1 bis 15, eine Übergabeeinheit und eine Blasstation mit einem mindestens eine Blaskavität aufweisenden Blasformwerkzeug sowie einer Blasgasquelle.
